# EUROPÄISCHE PATENTSCHRIFT

(11) **EP 2 924 226 B1**
(45) Veröffentlichungstag und Bekanntmachung des Hinweises auf die Patenterteilung: **31.05.2017**
(21) Anmeldenummer: 15156267.5
(22) Anmeldetag: 24.02.2015
(51) Int. Cl.: E06B 9/17, E04B 1/88

(54) **ROLLRAUMVERKLEIDUNG FÜR EINEN ROLLLADENKASTEN**
ROLLER SPACE CLADDING FOR A ROLLER SHUTTER HOUSING
REVÊTEMENT DE L'ESPACE D'ENROULEMENT POUR UN COFFRE DE STORE

(30) Priorität: 24.02.2014 DE 102014102381; 18.02.2015 DE 102015102302
(43) Veröffentlichungstag der Anmeldung: 30.09.2015
(73) Patentinhaber: Detenhoff, Reiner, 82229 Hechendorf (DE)
(72) Erfinder: Detenhoff, Reiner, 82229 Hechendorf (DE)
(74) Vertreter: Jöstingmeier, Martin

(56) Entgegenhaltungen:
- DE-A1-102009 052 010
- DE-U1-202011 108 238
- DE-U1-202012 100 407

## Beschreibung

### Technisches Gebiet

Die Erfindung betrifft eine Rollraumverkleidung zur Dämmung eines bestehenden Rollladenkasten und einen Bausatz für eine Rollraumverkleidung.

### Stand der Technik

Rollladenkästen sind häufig in das Mauerwerk eines Gebäudes integrierte oberhalb eines Fensterstocks angeordnete Ausnehmungen, in denen eine Rollladenwelle drehbar gelagert ist, die nachfolgend verkürzt als 'Welle' bezeichnet wird. Auf der Welle ist ein sogenannter Rollladenpanzer, auch Behang genannt, der durch Drehen der Welle durch einen Einlaufschlitz zwischen dem Fensterstock und der nach außen weisenden Wandung des Rollladenkastens vor dem Fenster abgelassen und wieder aufgeholt werden kann. Dabei wird der Behang in der Regel in zwei seitlichen Rollladenführungsschienen, die sich unterhalb des Einlaufschlitzes anschließen, geführt. Der Antrieb der Welle erfolgt entweder über ein Gurtband, das beim Ablassen des Behangs auf eine auf der Welle angeordnete Gurtscheibe aufgewickelt und zum Aufholen durch Ziehen am Gurtband wieder abgewickelt wird. Alternativ sind auch motorische Antriebe verbreitet. In der Regel ist die Rollladenwelle dann als Hohlwelle ausgestaltet, die den Motor aufnimmt. Problematisch an in das Mauerwerk integrierten Rollladenkästen ist, dass durch den Einlaufschlitz Außenluft in den Rollladenkasten eindringt und dadurch die Isolierung des Gebäudes beeinträchtigt wird.

Rollladenkästen gibt es als sogenannte Vorsatzkästen, die meist von außen oberhalb der Öffnung an der entsprechenden Wand angebracht werden. Diese Vorsatzkästen beinträchtigen die Wärmeisolierung und Statik der Wand nicht und werden häufig bei Nachrüstungen verbaut. Nachteilig ist die optische Beeinträchtigung der Fassade. Alternativ kann schon beim Bau des Gebäudes oberhalb der später reversibel zu verschließenden Öffnung ein Rollladenkasten vorgesehen werden. Im Rahmen dieser Anmeldung bezeichnet der Begriff "Rollladenkasten" nur eine solche bauseitige vorgesehene Ausnehmung zur Aufnahme wenigstens eines Rollladen und keine Vorsatzkästen.

Bei Neubauten werden die Rollladenkästen mittlerweile isoliert um Kältebrücken zu vermeiden. Dazu ist eine Vielzahl an Systemen auf dem Markt. Bei Bestandsbauten ist eine nachträgliche Isolierung der Rollladenkästen erforderlich, diese Kältebrücke zu schließen. Daher wurden verschiedene Rollraumverkleidungen vorgeschlagen, bei denen in den freien Raum zwischen dem aufgewickelten Rollladen und der inneren Begrenzung des Rollladenkastens wenigstens eine Isoliermatte nachträglich eingeschoben wird. Diese Isoliermatte hüllt den Rollraum zumindest zum Teil ein. Der Begriff Rollraum beschreibt dabei das zum Aufwickeln des Panzers notwendige Volumen. Dieses Volumen ist in der Regel deutlich kleiner als das Volumen der Rollladenkästen. Dazu wurden bisher einige Lösungen vorgeschlagen:
Eine Lösung dazu ist in der Offenlegungsschrift DE 10 2004 056 581 A1 beschrieben. Dort werden Wärmedämmelemente in den Rollladenkasten eingesetzt. Die Wärmedämmelemente werden dabei mit Abstandshaltern in dem Rollladenkasten an die nach innen (bezogen auf die Gebäudehülle) weisenden Wände des Rollladenkastens angelegt. Der dabei entstehende Zwischenraum zwischen den Wandungen und den Dämmelementen wird ausgeschäumt. Zwar kann mit dem Verfahren eine gute Isolierung erreicht werden kann, jedoch ist eine spätere Revision des Rollladenkastens stark erschwert, weil eine Inspektion der Welle oder der Gurtscheibe eine Zerstörung der Isolierung erfordert.

Sofern nicht nur der Rollladenkasten isoliert werden soll, sondern auch das darunter befindliche Fenster ausgetauscht wird, kann auf dem Fensterstock ein Rollladenaufsatz aufgesetzt werden, der die Rollladenmechanik nebst Rollladenpanzer in einem Gehäuse aus einem Isoliermaterial aufnimmt. Bei der Montage des Fensters wird dann der Rollladenaufsatz in den zuvor von unten geöffneten und ausgeräumten, bestehenden Rollladenkasten eingeschoben. Dies ist z.B. in dem EP 1 213 435 B1 beschrieben.
Sofern der Rollladenkasten isoliert und der Fensterstock erhalten werden soll, bietet sich die in der EP 2 199 527 B1 vorgeschlagene Lösung an. Dazu werden zunächst zwei Seitenteile einer Rollraumverkleidung auf dem Fensterstock in dem Rollladenkasten befestigt. Diese haben je ein Lager für die Welle. Zwischen die Seitenteile kann mittels einer Montagehilfe eine Isoliermatte eingesetzt werden. Die Seitenteile sind folglich Halterungen für die Isoliermatte, welche gleichzeitig die Lager der Rollladenwelle aufnehmen. Dadurch ist eine Zentrierung der Rollladenwelle in der Rollraumverkleidung gewährleistet.

DE 20 2011 108 238 offenbart eine Rollraumverkleidung für einen Rollladenkasten mit zwei Dämmplatten. Eine erste Dämmplatte ist auf der Bodenplatte des Rollladenkastens angeordnet und hat eine längs verlaufende Aufnahmenut in dem zum Innenraum weisenden Endbereich der Bodenplatte. In diese Aufnahmenut wird die Schmalseite der anderen Dämmplatte eingeschoben. Die gegenüberliegende Schmalseite der anderen Dämmplatte liegt stumpf an der Innenseite der Außenwandung des Rollladenkastens an.

DE 20 2012 100 407 D3 beschreibt einen isolierten Rollladenkasten, bei dem die Isolierung wie üblich unmittelbar auf die Begrenzungswände aufgebracht wird.

DE 10 2009 052 010 A1 betrifft eine Rollraumverkleidung aus einer Isolierstoffmatte, die in seitliche Halterungen eingeschoben wird. Die beiden Halterungen sind gelenkig an einem Träger angeschlagen und werden zum Einbau zunächst flach auf den Träger geklappt und dann in den zuvor ausgeräumten Rollladenkasten eingeschoben. Der Träger wird nun auf die Oberseite eines Fensterrahmens, d.h. auf den Fensterstocks aufgesetzt, wobei beidseits an dem Träger befestigte Zapfen von oben in je eine Ausnehmung einer Führungsschiene für einen Behang eingreift. Erst anschließend werden die zunächst auf dem Träger liegenden Halterungen hochgeschwenkt und verriegelt. Nun kann die Rollladenwelle in die Halterungen eingehängt werden.

### Darstellung der Erfindung

Die Erfindung beruht auf der Beobachtung, dass bei der Lösung nach dem EP 2 199 527 B1 die Welle Teil des entsprechenden Bausatzes ist, obgleich diese nicht unmittelbar zum gewünschten Ergebnis, d.h. nichts zur Isolierung des bestehenden Rollladenkastens beiträgt. Insbesondere wenn die Welle schon modernisiert wurde, d.h. z.B. mit einem motorischen Antrieb ausgerüstet wurde, macht es Sinn diese zuvor modernisierte Welle zu erhalten.
Zudem beruht die Erfindung auf der Erkenntnis, dass die Längsachse einer Rollraumverkleidung durch die Positionierung der Seitenteile festgelegt wird. Um auf Dauer eine einwandfreie Funktion des Rollladen zu gewährleisten, sollten die Seitenteile so positioniert werden, dass die Rotationsachse der Welle mit der Längsachse der Rollraumverkleidung zusammenfällt und zudem sollten diese Achse parallel zur außenseitigen Oberkante des Fensterstocks sein. Die Positionierung der Seitenteile in horizontaler und vertikaler Richtung und die Befestigung dieser in der gewünschten Position ist bei den aus dem Stand der Technik bekannten Lösungen jedoch sehr aufwändig und fehlerträchtig und sorgt regelmäßig zu Abschürfungen an Handrücken der Monteure.

Der Erfindung liegt die Aufgabe zugrunde, Rollladenkästen auch in Bestandsbauten effizient und kostengünstig zu dämmen.

Diese Aufgabe wird durch eine Rollraumverkleidung nach Anspruch 1, eine Halterung für die bzw. der Rollraumverkleidung und einen Bausatz für eine entsprechende Rollraumverkleidung gelöst. Vorteilhafte Ausgestaltungen der Erfindung sind in den Unteransprüchen angegeben.

Die Rollraumverkleidung dient zur Isolierung eines Rollladenkastens in dem eine Welle drehbar gelagert ist. Meist ist die Lagerung der Welle am oder zumindest im Bereich des den Rollladenkasten seitlich begrenzenden Mauerwerks. Die Lagerung kann auch von einer oder mehreren Halterungen, z.B. der Seitenteile der Rollraumverkleidung, wie z.B. in der EP 2 199 527 B1 beschrieben übernommen werden.

Die Rollraumverkleidung sollte den Einlaufschlitz vor dem Fensterstock abdichten, d.h. oberhalb des Einlaufschlitzes mit der Wandung des Rollladenkastens vorzugsweise dichtend abschließen und zudem dichtend am Fensterstock anliegen. Auch seitlich kann die Rollraumverkleidung den Einlaufschlitz umfassen. Alternativ oder zusätzlich kann die Rollraumverkleidung an zumindest einer Seite an der den Rollladenkasten seitlich begrenzenden Wandung vorzugsweise dichtend anliegen.

Die Rollraumverkleidung hat zumindest eine erste Halterung und vorzugsweise zumindest eine zweite Halterung zwischen denen wenigstens eine Isoliermatte angeordnet ist. Beispielsweise können die beiden Halterungen je zumindest einen vorzugsweise gekrümmten Führungsschlitz aufweisen, in den wenigstens eine Isoliermatte einschiebbar ist. Dieses Einschieben erfolgt bei Nachrüstungen vorzugsweise durch den Spalt einer geöffneten Revisionsklappe. Die Isoliermatte umhüllt den Rollraum für den Behang und liegt vorzugsweise an der den Rollladenkasten nach außen (bezogen auf die Gebäudehülle) begrenzenden Wandung an, wobei der entsprechende Spalt zwischen dem Rollladenkasten und der Isoliermatte vorzugsweise mit einem dauerelastischen Kunststoff abgedichtet wird, z.B. mit einem Dichtband, einem Dichtprofil, einem Dichtschlauch oder dgl..

Als Isoliermatte können sowohl flexible mattenartige Isolierstoffe verwendet werden, als auch starre Isolierformteile. Die Isoliermatte kann ein- oder auch mehrteilig sein. Vorzugsweise umfasst sie die Rollladenwelle in radialer Richtung, so dass ein Luftaustausch zwischen dem Außenklima außerhalb Gebäudehülle und der Innenseite (bezogen auf die Gebäudehülle) des Rollladenkastens durch den Einlaufschlitz unterbunden wird.

Zwischen der oder den Isoliermatten und der nach innen weisenden Wandung (bezogen auf die Gebäudehülle) des Rollladenkastens kann ein Luftspalt verbleiben, der zusätzlich wärmeisolierend wirkt.

Sofern die Halterungen wie in der EP 2 199 527 B1 beschrieben den Rollraum seitlich begrenzen, können sie auch als Seitenteile bezeichnet werden. Nach der Erfindung können zwischen den Seitenteilen jedoch weitere Halterungen (z.B. eine, zwei oder mehr) angeordnet werden, die die Isoliermatte tragen. Dadurch können auch große Rollladenkästen einfach isoliert werden, ohne dass das Handling der Isoliermatten aufgrund ihrer Größe problematisch würde und ohne dass (übergroße) Isoliermatten durchhängen, was den knappen Rollraum unnötig einschränken würde und beim Aufziehen des Panzers zu Schleifgeräuschen und Abrieb führen kann.

Die erste und/oder die zweite Halterung können jeweils eine Ausnehmung haben, deren Rand eine Rollladenwelle zumindest zum Teil einschließt und mit der Rollladenwelle einen Drehspalt bildet. Anders formuliert, können die Halterungen die Rollladenwelle umgreifen, ohne diese zu lagern oder entsprechende Lager statisch abzufangen. Die Abfangung der auf die Rollladenwelle wirkenden Kräfte erfolgt über deren bei Bestandsbauten in der Regel schon bestehende Lagerung, die meist an der Gebäudewand befestigt sind, also nicht über die Halterungen. In diesem Sinne können die Halterungen und die Rollladenwelle unabhängig voneinander sein. Dann genügt es, die Halterungen oberhalb des Fensterstocks, z.B. auf dessen Oberseite anzuordnen und anschließend die Isoliermatte an den Halterungen zu befestigen. Natürlich muss ein Austausch der Rollladenwelle beim Einbau der Rollraumverkleidung nicht zwangsläufig unterbleiben; ein Einbau der Rollraumverkleidung bedingt jedoch keine Veränderungen an der Rollladenwelle oder deren Lagerung. Zumindest die erste Halterung kann eine Abdichtung des Drehspalts aufweisen, z.B. eine Bürstendichtung. Gleichwirkend kann die Dichtung natürlich auch an der Welle befestigt sein. Die Abdichtung ist insbesondere dann sinnvoll, wenn die erste Halterung zwischen dem Behang und einer Gurtscheibe angeordnet ist. Die erste Halterung umgreift die Welle dann vorzugsweise zumindest nahezu vollständig und hat zumindest eine Schicht aus einem thermisch gut isolierenden Material, um einen Wärmeaustausch in axialer Richtung (bezogen auf die Welle) zu minimieren. Ein Drehspalt ist von einem Lagerspalt eins Gleit- oder Fluidlagers zu unterscheiden. Ein Drehspalt ist ein umlaufender Spalt der keine Kraftübertragung zwischen der Welle und der Halterung ermöglicht.

Vorzugsweise hat zumindest die erste Halterung von einem Befestigungsfuß ausgehend eine Art Ringscheibe, die sich zumindest in etwa quer zur Trägerlängsachse erstreckt und die Rollladenwelle vorzugsweise vollständig umgibt. Alternativ kann sie auch ein Lager zur drehbaren Lagerung der Rollladenwelle aufweisen.

Bevorzugt ist wenigstens ein Ringscheibensegment abklappbar, dadurch kann die Rollladenwelle in die Ringscheibe eingebracht werden, ohne die Rollladenwelle zu demontieren. Alternativ oder zusätzlich könnte die erste Halterung mehrteilig, z.B. zwei- oder dreigeteilt sein. Nachdem die erste Halterung mittels der beim Abklappen des wenigstens einen Ringscheibensegments freiwerdenden Öffnung auf die Rollladenwelle aufschoben wurde, kann die Öffnung durch Zurückklappen des wenigstens einen Ringscheibensegments in die Ebene der Ringscheibe geschlossen werden. Das Ringscheibensegment wird danach vorzugsweise in der Ebene der Ringscheibe fixiert. Die Ringscheibe kann nun den Rollraum des Rollladenpanzers zur Gurtscheibe hin abdichten. Dazu kann die erste Halterung soweit in Richtung der Gurtscheibe auf dem Träger verschoben werden, dass die erste Halterung zwischen dem gurtscheibenseitigen Ende des Einlaufschlitzes und der Gurtscheibe angeordnet ist. Dort wird die erste Halterung vorzugsweise fixiert, z.B. über die Schraube mit dem Träger verbunden. Die erste Halterung dichtet daher den mit dem Außenraum, d.h. auch mit dem Außenklima über den Einlaufspalt im Luftaustausch stehenden Rollraum gegen den über die Gurtdurchführung mit dem Innenraum, d.h. mit dem Innenklima in der Gebäudehülle im Luftaustausch stehenden Bereich der Gurtscheibe zumindest seitlich ab.

Die erste und/oder die zweite Halterung haben vorzugsweise eine Aufnahme für eine Zentrierlehre, die die jeweilige Ausnehmung auf den Durchmesser der Rollladenwelle verjüngt. Bei der Montage der Halterungen, kann die Zentrierlehre auf die Halterung aufgesetzt werden. Anschließend wird die jeweilige Halterung so positioniert, dass das Zentrum der Ausnehmung zumindest in etwa zur Rotationsachse der Welle zentriert ist. Nun kann die Halterung in der so gefundenen Position fixiert werden, z.B. durch wenigstens eine Schraube, wenigstens eine Niete, Klebstoff, wenigstens eine Verrastung oder dgl.. Die Zentrierlehre kann z.B. eine U-, V- oder kastenförmige Verjüngung der Ausnehmung sein.

Alternativ oder zusätzlich kann die erste und/oder die zweite Halterung ein Lager zur drehbaren Lagerung der Rollladenwelle aufweisen oder zumindest eine Aufnahme für ein solches Lager, dann kann der Drehspalt entfallen. Ansonsten können die beiden vorigen Absätze in gleicher Weise realisiert werden. Beispielsweise kann der beschriebene Klappmechanismus genutzt werden, um ein an der Welle vormontiertes Lager in eine dazu komplementäre Aufnahme der entsprechenden Halterung einzuschieben.

Zur Befestigung der Halterungen auf der Oberseite des Fensterstocks, haben diese vorzugsweise an ihren Unterseiten einen entsprechenden Befestigungsfuß, nachfolgend auch verkürzt als Fuß bezeichnet. Dieser Befestigungsfuß kann bei beiden Ausführungsformen, also bei der Ausführungsform mit Drehspalt oder der Ausführungsform mit wenigstens einem Lager zur Abfangung der Rollladenwelle vorgesehen sein.

Vorzugsweise sind zumindest die erste Halterung und/oder die zweite Halterung entlang wenigstens einer Achse parallel verschiebbar auf oder an einem Fensterstock befestigt. Beispielsweise kann die Halterung parallel zur vorderen Oberkante des Fensterstocks verschoben werden. Dadurch lässt sich die Breite des Rollraums leicht einstellen und an die Fensterbreite anpassen. Zusätzlich oder alternativ kann die Halterung auch orthogonal zur Längsachse des Fensterstocks horizontal verschiebbar oder schwenkbar sein. Eine schwenkbare Befestigung ermöglicht es die Höhe der Längsachse der Rollraumverkleidung einfach einzustellen, indem die Halterung zunächst auf die gewünschte Höhe geschwenkt und dann festgelegt wird, z.B. durch einen vorzugsweise reversible Klemmung, Rastnasen, Schrauben, Stifte oder dgl..

Bei Bestandsbauten ist die Position der Welle relativ zur Oberseite des Fensterstocks vorab nicht bekannt, sie variiert von Bauwerk zu Bauwerk und manchmal sogar innerhalb eine Bauwerks von Rollladenkasten zu Rollladenkasten. Durch die vorzugsweise parallel verschiebbare Befestigung der Halterung(en) können die Ausnehmungen zumindest in etwa zur Achse der Rollladenwelle zentriert werden bzw. bei der Ausführungsform einer die Rollladenwelle lagernden Halterung kann die Rollladenwelle auf sehr einfache Weise korrekt zum Auslaufspalt ausgerichtet und in der gewünschten Position fixiert werden. Dadurch kann sichergestellt werden, dass der Behang später nicht an der Isoliermatte oder den Halterungen schleift, bzw. nicht in dem Rollraum aufgenommen werden kann oder beim Ablassen verkantet.

Vorzugsweise sitzen zumindest die erste Halterung und/oder die zweite Halterung mit je wenigstens einem Befestigungsfuß auf einem Träger, der auf einer Oberseite wenigstens eines Fensterstocks aufsitzt und sich entlang der Längsrichtung der Oberseite des Fensterstocks erstreckt. Dadurch wird die Montage der Rollraumverkleidung deutlich vereinfacht: Zunächst wird der Träger auf der Oberseite des Fensterstocks aufgesetzt und dort befestigt. Zwischen dem Träger und dem Fensterstock wird vorzugsweise eine Isolierlage und/oder eine Dichtlage eingebracht, z.B. ein Moosgummiband oder dergleichen. Auf dem Träger können dann die Halterungen in der benötigten Stückzahl (wenigstens eine, meist mindestens zwei) angeordnet werden. Der Träger hat z.B. an seiner Rückseite (d.h. der Außenseite abgewandten Seite) vorzugsweise einen Spalt, in den das untere, ansonsten freie Ende einer Isoliermatte eingeschoben werden kann.

Die nach außen weisende Seite, d.h. die Frontseite des Trägers kann die außenliegende Oberkante des Fensterstocks vorzugsweise etwas übergreifen und oberhalb des Fensterstocks nach innen etwas gekrümmt sein. Dadurch bildet die Frontseite mit der nach innen weisenden Fläche der Außenwandung des Rollladenkastens einen sich nach oben vorzugsweise kontinuierlich erweiternden Einlaufschlitz. Folglich wird der Rollladenpanzer beim Absenken sicher durch den Einlaufschlitz geführt.

Vorzugsweise hat der Träger wenigstens eine Schiene, auf und/oder in der zumindest die erste und/oder die zweite Halterung horizontal verschiebbar angeordnet ist, bzw. sind. Die Schiene kann beispielsweise durch ein Profil, dass Teil des Trägers ist ausgebildet werden. Beispielsweise kann der Befestigungsfuß zumindest zunächst verschiebbar mit der Schiene im Eingriff stehen. Dadurch wird die Montage der Halterungen stark vereinfacht, denn die entsprechende Halterung kann zunächst in die Schiene eingesetzt, anschließend positioniert und dann ggf. fixiert werden. Das bedeutet eine große Erleichterung bei der Montage, weil die Positionen der Halterungen in dem engen Rollladenkasten insbesondere bei montierter und den Rollladenpanzer tragender Welle nicht ohne Weiteres vorab durch eine Messung zu bestimmen sind.

Beispielsweise kann die Schiene einen sich in Längsrichtung der Schiene verlaufenden Steg aufweisen, der in wenigstens einen Spalt einer Halterung eingreift, wodurch die entsprechende Halterung entlang der Längsrichtung der Schiene und vorzugsweise auch in (horizontaler) Querrichtung auf der Schiene positioniert werden kann.

Vorzugsweise hat der Träger wenigstens eine, besonders bevorzugt eine Vielzahl von Längsnuten und die erste und/oder die zweite Halterung wenigstens eine Rastnase, die in wenigstens eine der Längsnuten eingreift und die entsprechende Halterung dadurch quer zur Längsrichtung des Trägers festlegt. Entsprechend kann die Position der Halterung(en) quer zur Trägerlängsrichtung, und somit quer zur Welle horizontal eingestellt und durch Einschieben der Rastnase in die entsprechende Längsnut zumindest vorläufig fixiert werden; gleichwohl ist eine horizontale Verschiebung der Halterung entlang der Längsrichtung des Trägers bis zur vollständigen Fixierung noch möglich.

Besonders bevorzugt hat der Träger zumindest zwei vorzugsweise ineinander eingreifende und gegeneinander vertikal verstellbare, z.B. verschiebbare Profile, von denen ein erstes Profil auf der Oberseite des Fensterstocks aufliegt und ein zweites Profil die erste Halterung und/oder die zweite Halterung trägt. Dazu kann bzw. können das erste und/oder das zweite Profil wenigstens Vorsprung, z.B. einen vertikalen Steg aufweisen, der in (wenigstens) einen komplementären Spalt des jeweils anderen Profils eingreift. Der Vorsprung und der Spalt müssen nicht notwendigerweise vertikal verlaufen, sondern können auch schräg zur Vertikalen verlaufen. Der bei einer Verschiebung der Profile zueinander entstehende horizontale Versatz kann entweder in Kauf genommen, oder durch eine entsprechende horizontale Verschiebung der Halterungen kompensiert werden. Alternativ können Vorsprung und Spalt auch gekrümmt sein, wodurch eine Schwenkbewegung ermöglicht wird. In allen vorbeschriebenen Fällen bilden der Spalt und der Steg ein Gleitlager aus.

Durch eine vertikale Verstellung, z.B. Verschiebung des zweiten Profils relativ zum ersten Profil kann die Höhe der Halterungen, d.h. deren vertikale Position, sehr einfach eingestellt werden. Auch dies dient dazu, eine möglichst gute Zentrierung der Ausnehmungen um die Rotationsachse der Welle zu erreichen. Durch die vertikale Verstellung kann sozusagen die vertikale Dicke des Trägers einstellbar.

Das zweite Profil und/oder das erste Profil hat vorzugsweise wenigstens einen verstellbaren Anschlag, um ein ungewolltes Zusammenschieben der Profile bei vertikaler Belastung zu vermeiden. Beispielsweise kann wenigstens eine Schraube in einem sich an dem zweiten Profil abstützenden Gegengewinde sitzen. Das freie Ende der Schraube liegt dann an der Oberseite des ersten Profils an, wodurch vertikale Lasten über die Schraube von dem ersten in das zweite Profil eingeleitet werden. Durch eine Drehung der Schraube oder des Gegengewindes kann die Höhe des zweiten Profils und damit Dicke des Trägers einstellt werden.

Zudem kann der Träger, z.B. das erste und/oder das zweite Profil einen z.B. nach innen (richtungsmäßig bezogen auf die Gebäudehülle) offenen Spalt aufweisen, in den eine Schmalseite einer Isoliermatte eingeschoben wird. Zwischen dem ersten und dem zweiten Profil ist folglich eine Fuge, die vorzugsweise mit einem dauerelastischen Material abgedichtet wird, z.B. indem ein Moosgummistreifen eingelegt wird. Das erste Profil kann einteilig mit dem Fensterstock ausgebildet sein.

Die zumindest zweite Halterung hat vorzugsweise zwei Hohlzylindersegmentabschnitte, die über wenigstens eine Isolierstoffstütze als Abstandhalter miteinander verbunden sind. Dadurch wird vorzugsweise beidseits des Abstandshalters ein Führungsspalt für eine Isoliermatte gebildet und es kann eine Isoliermatte zwischen der ersten Halterung und der zweiten Halterung aufgenommen werden. Wenn nicht nur auf einer Seite, sondern beidseits des Abstandshalters ein Führungsspalt angeordnet ist, kann auch auf der der ersten Halterung abgewandten Seite kann eine Isoliermatte gehaltert werden, deren anderes Ende an der seitlichen Begrenzung des Rollladenkastens anliegen kann, d.h. der Rollraum kann zumindest auf der der Gurtscheibe abgewandten Seite in seiner ganzen Länge isoliert werden. Zudem kann die zweite Halterung als Zwischenabstützung zwischen zwei Isoliermatten eingesetzt werden. Das ist bei großen, genauer bei breiten Fenstern sinnvoll und erleichtert die Logistik, weil Isoliermatten nur noch in einer oder ggf. zwei Standardgrößen vorgehalten werden müssen, die zudem vergleichsweise schmal sein können, z.B. 1,5m, 1m, 80cm oder weniger. Ein weiterer Vorteil besteht darin, dass aufgrund der nahezu beliebigen Anzahl an Halterungen auch größere statische Lasten zuverlässig abgefangen werden können. Die Isoliermatte kann daher gegenüber dem Stand der Technik ein erhöhtes Eigengewicht aufweisen und/oder mit einer Folie mit möglichst hoher Dichte bezogen sein, um nicht nur eine Wärme-, sondern auch eine Schalldämmung zu erreichen.

Insbesondere bei motorisch betriebenen Rollläden ist auch die erste Halterung vorzugsweise wie die zuvor beschriebene zweite Halterung ausgebildet, denn dann kann die Gurtscheibe entfallen und eine Abdichtung des Rollraums bis zu Seitenwand des Rollladenkastens ist möglich und vorteilhaft.

Vorzugsweise hat der Träger an seiner Außenseite wenigstens eine Führungsschiene in der zwei Einführungsstücke mit einer sich nach unten verjüngenden Spaltöffnung horizontal verschiebbar angeordnet sind. Das untere Ende der Spaltöffnung kann in einer Führungsschiene für den Rollladenpanzer münden. Die Einführungsstücke können dann in ihrer Position sehr einfach an den bestehenden Rollladenpanzer angepasst werden und in der Sollposition ggf. fixiert werden und ermöglichen damit eine sichere Einführung des Rollladenpanzers in die Führungsschiene. Anders formuliert sind die Einführungsstücke sich nach oben erweiternde, also nach unten verjüngende Führungsschienen, deren Position durch eine horizontale Verschiebung in Längsrichtung des Trägers unabhängig von der Position der Halterung(en) eingestellt werden kann, um die bauseitig vorgesehenen Führungsschienen nach oben zu verlängern. Das untere Ende der Einführungsstücke ist greift in montiertem Zustand vorzugsweise in die bauseitig vorhandene Führungsschiene für den Rollladenpanzer ein.

Zumindest einige der Teile für die zuvor beschriebene Rollraumverkleidung werden vorzugsweise als Bausatz angeboten. Der Bausatz umfasst dabei zumindest eine erste und/oder eine zweite Halterung für wenigstens eine Isoliermatte. Vorzugsweise ist der oben beschriebene Träger ebenfalls Teil des Bausatzes. Der Träger kann dann vor Ort einfach auf die jeweils gegebene Länge zugeschnitten und anschließend auf der Oberseite eines Fensterstocks montiert werden. Entsprechend ist der Träger schmal und vglw. lang, weshalb er einfach durch den Spalt der Revisionsöffnung eines Rollladenkastens eingeführt werden kann. Danach werden die Halterungen vorzugsweise mit Montagefüßen auf den Träger aufgesetzt, ggf. positioniert und anschließend vorzugsweise dauerhaft fixiert. Nun kann wenigstens eine Isoliermatte zwischen die Halterungen in entsprechende Führungsschlitze eingeschoben werden.

Sofern eine Halterung nur zur Zwischenabstützung breiter Isoliermatten verwendet werden soll, genügt es, wenn die Halterung zum einen die den Drehspalt ausbildende Ausnehmung als auch eine Auflagefläche für die Isoliermatte aufweist. Ein Umfassen einer Schmalseite, wie dies bei dem zuvor beschriebenen Führungsspalt erfolgt, ist dann nicht erforderlich. Im Übrigen gilt das zur ersten bzw. zweiten Halterung beschriebene entsprechend. Sofern notwendig kann natürlich anstelle des Drehspalts ein Lager zur Unterstützung der Rollladenwelle vorgesehen sein.

### Beschreibung der Zeichnungen

Die Erfindung wird nachstehend anhand von Ausführungsbeispielen unter Bezugnahme auf die Zeichnungen exemplarisch beschrieben. Es zeigen:
Figur 1 eine perspektivische Ansicht einer teilmontierten Rollraumverkleidung,
Figur 2 die teilmontierte Rollraumverkleidung in einer weiteren Perspektive,
Figur 3 die teilmontierte Rollraumverkleidung in der Seitenansicht,
Figur 4 die teilmontierte Rollraumverkleidung mit eingesetzter Isoliermatte, und
Figur 5 eine Halterung für eine Isoliermatte.

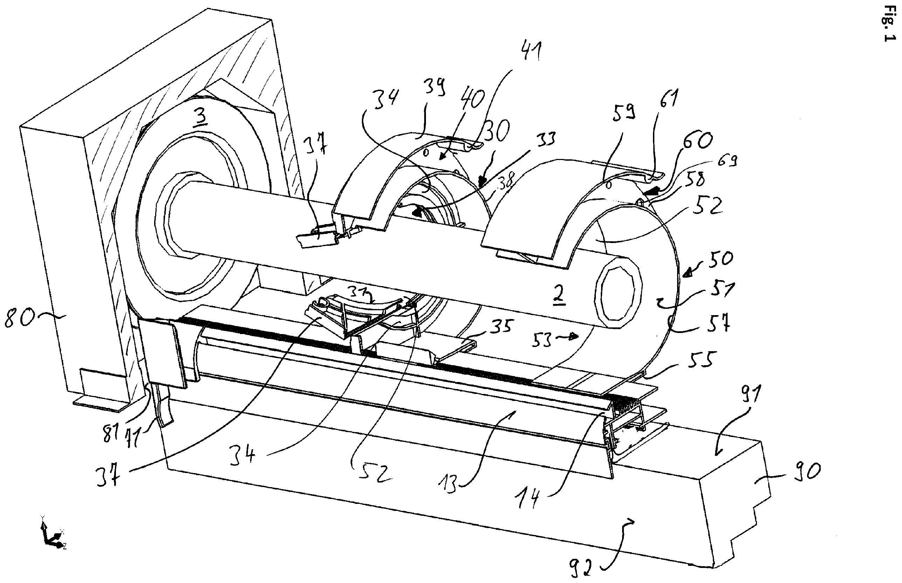

Figuren 1 bis 4 zeigen schematisch vereinfacht den oberen Querträger 90 eines Fensterstocks über dem ein geschnitten dargestellter Rollladenkasten 80 angeordnet ist. In dem Rollladenkasten 80 ist eine Rollladenwelle 2 drehbar gelagert. Auf der Rollladenwelle 2 sitzt wie üblich eine Gurtscheibe 3. Der üblicherweise auf der Rollladenwelle 2 angeordnete Rollladenpanzer wurde zur Verbesserung der Übersichtlichkeit nicht dargestellt.

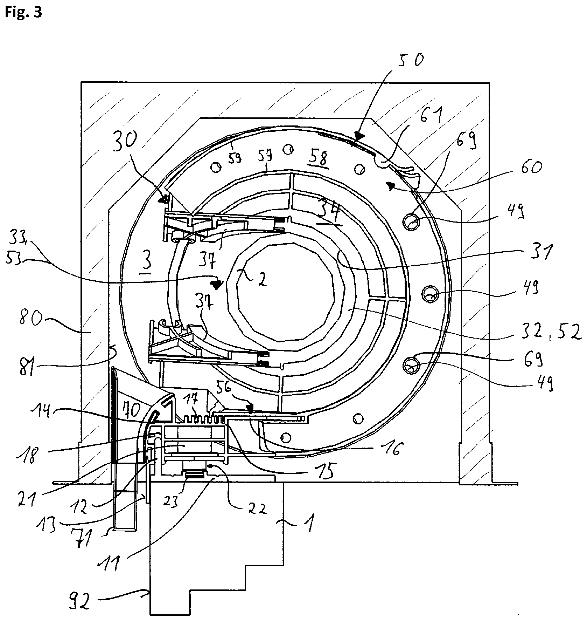

Zur Montage der Rollraumverkleidung wird zunächst ein Träger 10 auf die Oberseite 91 des Fensterstocks 90 aufgesetzt. Vorzugsweise übergreift dabei die Vorderseite des Trägers 10 den Fensterstock 90, dessen Vorderseite 92 dann als Anschlag für den Träger 10 dient. Anschließend können Halterungen 30, 50 auf den Träger 10 aufgesetzt werden, die erst danach positioniert und ggf. fixiert werden (vgl. insbes. Fig. 3).

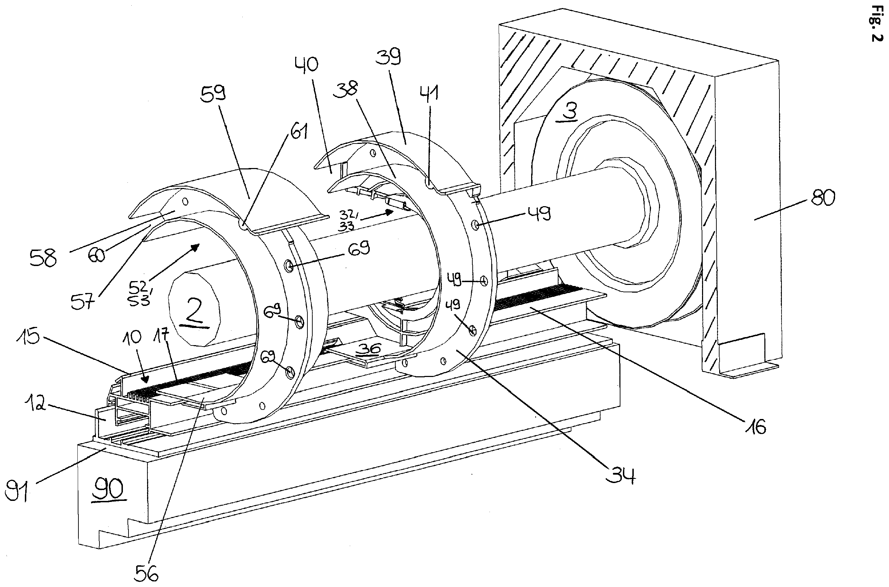

Wie am besten in Fig. 3 zu erkennen ist, hat der Träger 10 ein erstes (unteres) Profil 11 und ein zweites (oberes) Profil 15. Die beiden Profile 11, 15 sind vorzugsweise vertikal verschiebbar gegeneinander gelagert (vgl. Fig. 2). Dazu kann das erste Profil 11 wenigstens einen wie dargestellt vorzugsweise vertikalen Vorsprung 12 aufweisen, der in einen komplementären Spalt 18 des zweiten Profils 15 eingreift (vgl. Fig. 2) und mit diesem ein Gleitlager bildet. Natürlich könnte auch das zweite Profil 15 den Vorsprung 15 und das andere Profil 11 den Spalt 18 aufweisen. Ebenso können mehrere Vorsprünge und eine entsprechende Anordnung an Spalten vorgesehen sein. Lediglich beispielhaft ist der Vorsprung 12 als Steg 12 ausgebildet. Auch Zapfen oder dgl. sind denkbar, ebenso könnte anstelle des Spalts 18 auch eine zu einem Zapfen komplementäre Gleitlagerbuchse oder dgl. vorgesehen sein. Die dargestellte Variante hat den Vorteil, dass die Profile leicht extrudiert werden können.

In dem zweiten Profil 15 kann ein Gewinde 21 festgelegt sein, in dem eine Schraube 22 drehbar aufgenommen ist. Das untere Ende der Schraube 22 kann sich auf dem ersten Profil 11 abstützen, so dass sich durch eine Drehung der Schraube 22 der von den beiden Profilen gebildete Spalt und damit die Dicke des Trägers 10 einstellen lässt. Das untere Ende der Schraube 22 bildet daher einen verstellbaren Anschlag des zweiten Profils 15 für das erste Profil 11.

Vorzugsweise verjüngt sich, wie angedeutet, das untere Ende 23 der Schraube 22 nach oben und sitzt in einer komplementären Aufnahme des ersten Profils 11, so dass auch Zugkräfte zwischen der Schraube 22 und dem ersten Profil 11 übertragen werden können. Dadurch wird sichergestellt, dass auch bei einer schwergängigen Lagerung der beiden Profile 11, 15 zueinander die Dicke des Trägers 10 durch Drehen der Schraube 22 zuverlässig eingestellt werden kann. Der Schraubenkopf der Schraube 22 ist dazu über ein Loch (nicht sichtbar) in der Oberseite des Trägers 10 zugänglich. Durch eine Drehung der Schraube 22 können daher die Halterungen 30, 50 in der Höhe, d.h. vertikal eingestellt werden. In der Zeichnung sind nur ein Gewinde 21 und nur eine Schraube 22 sichtbar, vorzugsweise hat der Träger 10 jedoch wenigstens zwei Gewinde 21 und zwei Schrauben 22, um die Oberseite des Trägers 10 parallel zur Rotationsachse der Welle 2 ausrichten zu können. Weitere Schrauben 22 (als Beispiel für einen verstellbaren Anschlag) können einem Durchhängen des zweiten Profils 15 entgegenwirken.

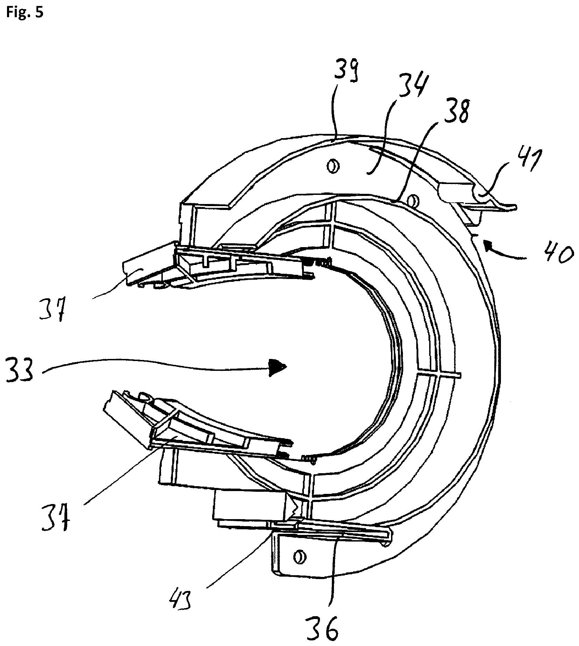

Jede der Halterungen 30, 50 hat einen zum Träger 10 komplementären Befestigungsfuß 35, 55, mit dem die jeweilige Halterung 30, 50 auf einer Schiene 16 des Trägers 10 horizontal verschiebbar sitzt (vgl. Fig. 1 bis Fig. 5). Die Schiene 16 wird von dem oberen Profil 15 ausgebildet und hat im gezeigten Beispiel die Form eines sich horizontal erstreckenden Stegs. Die beiden Halterungen 30, 50 können daher in seitlicher Richtung, d.h. parallel zur Welle 2 auf dem Träger in die gewünschte Position verschoben werden. Ebenso können die Halterungen 30, 50 auch quer zur Welle auf der Schiene verschoben werden. Um die Halterungen 30, 50 in einer gewünschten Position quer zur Welle zu fixieren, hat der Träger 10 sich parallel zur Rollladenwelle 2, d.h. in Längsrichtung des Trägers erstreckende Nuten 17, in die Rastnasen 43, 63 (vgl. Fig. 5) der Halterungen 30, 50 eingreifen.

Die Halterungen 30, 50 lassen sich folglich in allen drei Raumachsen parallel verschieben: In horizontaler Richtung sowohl in längs entlang der Schiene als auch quer dazu, wobei ggf. die Rastnasen die die Nuten 17 trennenden Rippen überspringen müssen. In vertikaler Richtung durch ein Verstellen der Position des zweiten (oberen) Profils 15 mittels der beispielhaft, durch Schrauben 22 beispielhaft realisierten, verstellbaren Anschläge. Dadurch kann sichergestellt werden, dass die nachfolgend näher beschriebenen Ausnehmungen 33,53 zumindest in etwa zur Rotationsachse der Rollladenwelle 2 zentriert sind. Für den Fall nicht dargestellten Fall, dass die Halterungen je ein Lager für die Welle aufnehmen, würde über eine Verstellung der Position der entsprechenden Halterung 30 die Ausrichtung der Welle in dem Rollladenkasten justiert.

Die beiden Halterungen 30, 50 haben Aufnahmen 49, 69 (Fig. 3 und Fig. 5) in die eine nicht dargestellte Zentrierlehre eingesetzt werden kann. Mittels der Zentrierlehre kann die Position der Halterungen 30, 50 relativ zu Rollladenwelle präzise eingestellt werden. Anschließend werden die Halterungen 30, 50 vorzugsweise dauerhaft fixiert und die Zentrierlehre wird wieder entfernt. Zum dauerhaften Fixieren kann im einfachsten Fall eine Schraube derart in die Halterung 30 eingedreht werden, dass sie wenigstens eines der Profile mit der Halterung verbindet. Alternativ kann natürlich auch eine Klebeverbindung oder eine andere geeignete Verbindung erfolgen.

Vom jeweiligen Befestigungsfuß 35, 55 ausgehend, umgreifen die beiden Halterungen 30, 50 die Rollladenwelle ringartig, bzw. ringsegmentartig (Fig. 1 bis
Fig. 5). Dazu haben sie je eine mittige Ausnehmung 33, 53 in der die Rollladenwelle 2 angeordnet ist. Dabei bildet der halterungsseitige Rand 31, 51 der jeweiligen Halterung 30, 50 mit der Mantelfläche der Rollladenwelle 2 einen Drehspalt 32, 52.

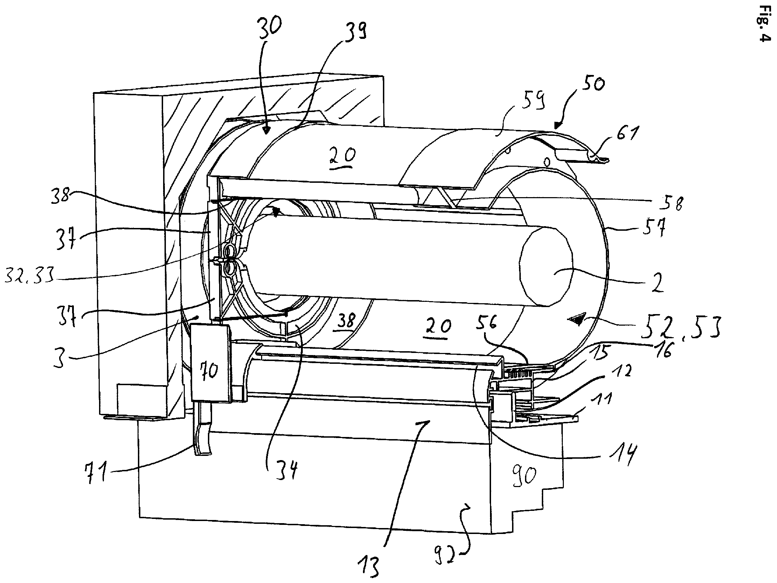

Die erste Halterung 30 ist in Fig. 5 im Detail dargestellt und hat eine Art Ringscheibe 34, die die Rollladenwelle 2 vollständig umgibt (vgl. Fig. 1 und 2). Um die Rollladenwelle 2 in die Ringscheibe 34 einbringen zu können, ist wenigstens ein Ringscheibensegment 37 abklappbar; dargestellt sind zwei abklappbare Ringscheibensegmente 37 (Fig. 1, 2, 3 und 5). Alternativ oder zusätzlich könnte die Halterung 30 mehrteilig, z.B. zwei- oder dreigeteilt sein. Nachdem die erste Halterung 30 mittels der beim Abklappen des wenigstens einen Ringscheibensegments 37 freiwerdenden Öffnung auf die Rollladenwelle2 aufschoben wurde, wird die Öffnung durch Zurückklappen des wenigstens einen Ringscheibensegments 37 in die Ebene der Ringscheibe 34 geschlossen. Das Ringscheibensegment 37 wird vorzugsweise in der Ebene der Ringscheibe 34 fixiert. Die Ringscheibe 34 dichtet den Rollraum des Rollladenpanzers zur Gurtscheibe 3 hin ab. Dazu wird die erste Halterung soweit in Richtung der Gurtscheibe auf dem Träger 10 verschoben, dass die erste Halterung zwischen dem gurtscheibenseitigen Ende des Einlaufspalts und der Gurtscheibe 3 angeordnet ist, wie es in Fig. 4 dargestellt ist. In dieser Position wird die erste Halterung 30 vorzugsweise fixiert, z.B. über wenigstens eine Schraube mit dem Träger verbunden. Die erste Halterung 30 dichtet daher den mit dem Außenraum über den Einlaufschlitz im Luftaustausch stehenden Rollraum gegenüber dem über die Gurtdurchführung mit dem Innenraum im Luftaustausch stehenden Bereich der Gurtscheibe 3 ab. Dazu kann der Drehspalt 32 vorzugsweise durch eine Bürstendichtung abgedichtet werden (aus Gründen der Übersichtlichkeit nicht dargestellt).

Wie in den Figuren 1 bis 4 zu erkennen ist, wird die Ausnehmung 53 der zweiten Halterung 50 von einem näherungsweise hohlzylindrischen ersten inneren Ringsegment 57 begrenzt. Dessen radial nach innen weisende Fläche 51 begrenzt die Ausnehmung 53 für die Rollladenwelle 2 und bildet mit deren Mantelfläche einen Drehspalt 52. Dieser Drehspalt ist so bemessen, dass auch ein auf die Welle 2 gewickelter Rollladenpanzer darin ausreichend Platz findet.

Auf der radial äußeren Mantelfläche des ersten Ringsegments 57 kann wie dargestellt ein Abstandhalter 58 aufgesetzt sein, der ein radial außenliegendes zweites Ringsegment 59 trägt, so dass zwischen den beiden Ringsegmenten 57, 59 beidseits des Abstandhalters 58 ein Führungsspalt 60 für je wenigstens eine Isoliermatte 20 (vgl. Fig. 4) gebildet wird. Ein Führungsspalt 60 weist folglich in Richtung der ersten Halterung 30 und der andere von ihr weg (vgl. Fig. 1 bis Fig. 3). Somit kann zwischen der ersten Halterung 30, die in gleicher Weise einen Führungsspalt 40 zwischen einem radial innenliegenden und einem radial außenliegenden Ringsegment 38, 39 aufweist, und dem entsprechenden Führungspalt 60 der zweiten Halterung 50 zumindest eine Isoliermatte 20 eingeschoben werden (Fig. 4).

Ein Teil der außenliegenden Ringsegmente 39, 59 kann als vorzugsweise federnde Rastnasen 41, 61 zur Fixierung der Isoliermatte 20 ausgebildet sein (Fig. 1 bis Fig. 5).

Bei beiden Halterungen 30, 50 kann das radial außenliegende Ringsegment 39, 59 gegenüber dem entsprechenden radial innenliegenden Ringsegment 39, 59 kürzer sein, so dass die Führungsspalte 40, 60 nach innen (bezogen auf die Gebäudehülle) offen sind. Durch diese Öffnung kann von der Innenseite des Fensters aus eine Isoliermatte 20 in zwei einander gegenüberliegende Führungsspalte 40, 60 eingeschoben werden.

Auf der der ersten Halterung 30 abgewandten Seite kann ebenfalls eine Isoliermatte in den Führungsspalt 60 der zweiten Halterung 50 eingeschoben werden. Das andere Ende dieser Isoliermatte 50 kann entweder in einem Führungsspalt 60 einer weiteren Halterung 50 sitzen oder sich an der den Rollladenkasten 3 seitlich begrenzenden Wandung (nicht dargestellt) abstützten.

Vorzugsweise ist die Ausnehmung 53 der zweiten Halterung 50 so bemessen, dass sie auch einen auf der Rollladenwelle 2 aufgewickelten Rollladenpanzer aufnehmen kann. Es können dann mit vergleichsweise schmalen Isoliermatten 20 durch eine entsprechend hohe Anzahl von Halterungen 50 auch sehr breite Rollräume isoliert werden. Wenn die Rollladenwelle 2 keine Gurtscheibe 3 trägt, kann anstelle der,ersten' Halterung 30 auch eine zu der,zweiten' Halterung 50 identische Halterung als erste Halterung verwendet werden, wodurch die Isoliermatte 20 bis an den entsprechenden seitlichen Rand des Rollladenkastens 3 geführt werden kann.

Die nach außen weisende Frontseite 13 des Trägers 10 übergreift die außenliegende Oberkante des Fensterstocks 90 vorzugsweise etwas und ist oberhalb des Fensterstocks 90 vorzugsweise etwas nach innen gekrümmt (Fig. 1 und 3). Dadurch bildet die Frontseite 13 mit der nach innen weisenden Fläche 81 der Außenwandung des Rollladenkastens 80 einen sich nach oben vorzugsweise kontinuierlich erweiternden Einlaufschlitz zur Führung des Rollladenpanzers.

In der Frontseite 13 ist eine horizontale Führungsschiene 14 in der wenigstens ein, vorzugsweise zwei Einlaufstücke 70 angeordnet sind (vgl. insbes. Fig. 3). Die Einlaufstücke 70 sind sich trichterartig nach oben erweiternde Übergangsstücke, die beim Ablassen des Rollladenpanzers dessen Unterseite in die üblichen seitlichen Rollladenführungsschienen einfädeln und ein sauberes Einlaufen des Behangs in die Rollladenführungsschienen sicher stellen. Zudem wird dadurch ein Verkanten des Behangs aufgrund des sich beim Ablassen (oder Aufziehen) verändernde Eintrittswinkels des Behangs in die Rollladenführungsschienen verhindert. Ein Zapfen 71 des Einlaufstücks 70 greift im montierten Zustand in die entsprechende Führungsnut ein und stellt dadurch sicher, dass der Rollladenführungsschienen und der sich verjüngende Spalt des Einlaufstücks 70 miteinander zumindest näherungsweise fluchten.

Die beiden Halterungen 30, 50 haben Aufnahmen 49, 69 in die eine nicht dargestellte Zentrierlehre eingesetzt werden kann. Mittels der Zentrierlehre kann die Position der Halterungen 30, 50 relativ zu Rollladenwelle präzise eingestellt werden. Anschließend werden die Halterungen 30, 50 vorzugsweise dauerhaft fixiert und die Zentrierlehre wird wieder entfernt.

### Bezugszeichenliste

- 2: Welle / Rollladenwelle
- 3: Gurtscheibe
- 10: Träger
- 11: erstes (unteres) Profil
- 12: beispielhaft als vertikaler Steg ausgebildeter Vorsprung
- 13: Frontseite
- 14: Führungsschiene
- 15: zweites (oberes) Profil
- 16: Führungsschiene für Halterungen 30, 50
- 17: Nuten zum Festlegen der Halterungen 30, 50
- 18: Spalt für vertikalen Steg
- 20: Isoliermatte
- 21: Gewinde
- 22: Schraube
- 23: unteres Ende der Schraube 22
- 30: erste Halterung
- 31: Rand der Ausnehmung
- 32: Drehspalt
- 33: Ausnehmung
- 35: Führungsschlitz
- 36: Befestigungsfuß / Fuß
- 37: Ringscheibensegment
- 38: erstes Ringsegment
- 39: zweites Ringsegment
- 40: Führungsspalt
- 41: Rastnase
- 49: Aufnahme für Zentrierlehre
- 50: zweite Halterung
- 51: radial nach innen weisende Fläche der zweiten Halterung 50
- 52: Drehspalt
- 53: Ausnehmung
- 56: Befestigungsfuß / Fuß
- 57: erstes Ringsegment
- 58: Abstandhalter
- 59: zweites Ringsegment
- 60: Führungsspalt
- 61: Rastnase
- 69: Aufnahme für Zentrierlehre
- 70: Einlaufstück
- 80: Rollladenkasten (teilgeschnitten)
- 90: oberer Querbalken eines Fensterstocks
- 91: Oberseite des Fensterstocks 90
- 92: Frontseite des Fensterstocks 90

## Patentansprüche

1. Rollraumverkleidung zum Einhüllen eines Rollraums eines Rollladenkastens (3) in dem eine Rollladenwelle (2) drehbar gelagert ist, mit wenigstens einer ersten Halterung (30) und zumindest einer zweiten Halterung (50) wenigstens einer Isoliermatte (20), welche den Rollraum zumindest zum Teil einhüllt, wobei die erste Halterung (30) und/oder die zweite Halterung (50) auf oder an wenigstens einem Träger (10) sitzen, der auf einer Oberseite (91) wenigstens eines Fensterstocks (90) aufsitzt und sich entlang der Längsrichtung der Oberseite (91) erstreckt,
**dadurch gekennzeichnet, dass**
der Träger (10) wenigstens eine Schiene (16) hat, auf, an oder in der zumindest die erste und/oder die zweite Halterung (30, 50) horizontal verschiebbar angeordnet sind bzw. ist.

2. Rollraumverkleidung nach Anspruch 1,
**dadurch gekennzeichnet, dass**
der Träger (10) zumindest zwei gegeneinander vertikal verstellbare Profile (11, 15) aufweist, von denen ein erstes Profil (11) in Einbaulage auf der Oberseite (91)
des Fensterstocks (90) aufliegt und ein zweites Profil (15) die erste Halterung (30) und/oder die zweite Halterung (50) trägt.

3. Rollraumverkleidung nach Anspruch 2,
**dadurch gekennzeichnet, dass**
wenigstens eines der beiden Profile (11, 15) einen Spalt (18) hat, in das andere der beiden Profile (11, 15) mit einem dazu komplementären Vorsprung (12) eingreift und mit dem Spalt ein Gleitlager ausbildet.

4. Rollraumverkleidung nach Anspruch 1,
**dadurch gekennzeichnet, dass**
der Träger (10) zumindest zwei gegeneinander vertikal verstellbare Profile (11, 15) aufweist, von denen ein erstes Profil (11) von der Oberseite (91) des Fensterstocks (90) gebildet wird und ein zweites Profil (15) die erste Halterung (30) und/oder die zweite Halterung (50) trägt..

5. Rollraumverkleidung nach einem der vorstehenden Ansprüche,
**dadurch gekennzeichnet, dass**
die erste Halterung (30) und/oder die zweite Halterung (50) wenigstens einen Befestigungsfuß (36) aufweisen, der mit dem Träger (10) im Eingriff steht.

6. Rollraumverkleidung nach einem der vorstehenden Ansprüche,
**dadurch gekennzeichnet, dass**
die erste Halterung (30) und/oder die zweite Halterung (50) wenigstens eine Rastnase hat bzw. haben, die in wenigstens eine Längsnut des Trägers (10) eingreift und die entsprechende Halterung (30, 50) dadurch quer zur Längsrichtung des Trägers (10) festlegt.

7. Rollraumverkleidung nach Anspruch 6,
**dadurch gekennzeichnet, dass**
der Träger (10) wenigstens zwei Längsnuten für die Rastnase hat.

8. Rollraumverkleidung nach einem der vorstehenden Ansprüche,
**dadurch gekennzeichnet, dass**
der Träger (10) eine Frontseite hat, die oberhalb des Fensterstocks nach innen gekrümmt ist, und dadurch mit der nach innen weisenden Fläche der Außenwandung des Rollladenkastens einen sich nach oben erweiternden Einlaufschlitz für einen Rollladenpanzer zu bilden.

9. Rollraumverkleidung nach einem der Ansprüche 2 bis 8
**dadurch gekennzeichnet, dass**
der Träger (10) an seiner Frontseite (13) wenigstens eine Führungsschiene (14) hat in der zwei Einführungsstücke (70) mit je einer sich nach unten verjüngenden Spaltöffnung horizontal verschiebbar angeordnet sind.

10. Rollraumverkleidung nach einem der vorstehenden Ansprüche,
**dadurch gekennzeichnet, dass**
die erste und/oder die zweite Halterung (30, 50) zwei Ringsegmente (57, 59) aufweist, die über wenigstens einen Abstandhalter (58) miteinander verbunden sind, wodurch beidseits des Abstandshalters (58) von den Ringsegmenten (57, 59) je wenigstens ein Führungsspalt (60) für die zumindest
eine Isoliermatte (20) gebildet wird.

11. Rollraumverkleidung nach einem der vorstehenden Ansprüche,
**dadurch gekennzeichnet, dass**
die erste/und die zweite Halterung (30, 50) wenigstens einen Führungsspalt zum Einschieben der Isoliermatte hat und dass die Halterung (30, 50) eine Ausnehmung (33, 53) für eine Rollladenwelle (2) hat, wobei der Rand (31, 51) der Ausnehmung die Rollladenwelle (2) zumindest zum Teil einschließt und mit der Rollladenwelle (2) einen Drehspalt (32, 52) bildet ohne die Rollladenwelle zu lagern.

12. Bausatz einer Rollraumverkleidung, nach einem der vorstehenden Ansprüche,
**dadurch gekennzeichnet, dass**
der Bausatz zumindest die erste Halterung (30) und eine zweite Halterung (50) mit wenigstens eine Isoliermatte (20) sowie den Träger (10) beinhaltet, **dadurch gekennzeichnet, dass**
der Träger (10) wenigstens eine Schiene (16) hat, auf, an oder in der zumindest die erste und/oder die zweite Halterung (30, 50) horizontal verschiebbar anbringbar sind bzw. ist.

## Claims

1. Roller compartment cladding for enclosing the roller compartment of a roller shutter casing (3) in which a roller shutter shaft (2) is rotatably mounted, with at least one first holder (30) and at least one second holder (50) of at least one insulating mat (20) which encloses the roller compartment at least partially, wherein the first holder (30) and/or the second holder (50) sit on or at at least one support (10), which support rests on a top side (91) of at least one window frame (90) and extends along the longitudinal direction of the top side (91),
**characterized in that**
the support (10) comprises at least one rail (16), on which, at which or in which at least one the first and/or the second holder (30, 50) is/are arranged horizontally displaceable.

2. Roller compartment cladding according to claim 1,
**characterized in that**
the support (10) comprises at least two mutually vertically adjustable profiles (11, 15) of which a first profile (11) rests on the top side (91) of the window frame (90) in a mounting position, and a second profile (15) bears the first holder (30) and/or the second holder (50).

3. Roller compartment cladding according to claim 2,
**characterized in that**
at least one of the two profiles (11, 15) has a gap (18), in which the other of the two profiles (11, 15) engages with a complementary protrusion (12) and forms a slide bearing with the gap.

4. Roller compartment cladding according to claim 1,
**characterized in that**
the support (10) comprises at least two mutually vertically adjustable profiles (11, 15) of which a first profile (11) is formed by the top side (91) of the window frame (90) and a second profile (15) bears the first holder (30) and the second holder (50).

5. Roller compartment cladding according to one of the preceding claims,
**characterized in that**
the first holder (30) and/or the second holder (50) comprise at least one mounting foot (36), which engages with the support (10).

6. Roller compartment cladding according to one of the preceding claims,
**characterized in that**
the first holder (30) and/or the second holder (50) has/have at least one detent which engages in at least one longitudinal groove of the support (10) and thereby fixes the corresponding holder (30, 50) transversely to the longitudinal direction of the support (10).

7. Roller compartment cladding according to claim 6,
**characterized in that**
the support (10) has at least two longitudinal grooves for the detent.

8. Roller compartment cladding according to one of the preceding claims,
**characterized in that**
the support (10) has a front side which is curved inwardly above the window frame, and thereby forms, together with the inwardly facing surface of the outer wall of the roller shutter casing, an upwardly widening inlet slot for a roller shutter.

9. Roller compartment cladding according to one of claims 2 to 8,
**characterized in that**
the support (10) has at least one guide rail (14) on its front side (13), in which two insertion pieces (70) each having a downwardly tapering gap opening are arranged horizontally displaceable.

10. Roller compartment cladding according to one of the preceding claims,
**characterized in that**
the first and/or second holder (30, 50) comprise two ring segments (57, 59) which are interconnected via at least one spacer (58), whereby on both sides of the spacer (58), respectively, at least one guide gap (60) for the at least one insulating mat (20) is formed by the ring segments (57, 59).

11. Roller compartment cladding according to one of the preceding claims,
**characterized in that**
the first and/or second holder (30, 50) has at least one guiding rail for inserting the insulation mat, and that the holder (30, 50) has a recess (33, 53) for a roller shutter shaft (2), wherein the edge (31, 51) of the recess encloses the roller shutter shaft (2) at least partially, and forms a rotational gap (32, 52) with the roller shutter shaft (2) without bearing the roller shutter shaft.

12. Kit for a roller compartment cladding according to one of the preceding claims,
**characterized in that**
the kit comprises at least the first holder (30) and a second holder (50) with at least one insulating mat (20) as well as the support (10), **characterized in that**
the support (10) has at least one rail (16), on which, at which or in which at least the first and/or the second holder (30, 50) is/are arranged horizontally displaceable.

## Revendications

1. Capotage d'espace d'enroulement destiné à envelopper un espace d'enroulement d'un coffre de volet roulant (3) dans lequel un arbre de volet roulant (2) est supporté avec possibilité de rotation, avec au moins une première fixation (30) et au moins une deuxième fixation (50) pour au moins un tapis isolant (20) qui enveloppe au moins en partie l'espace d'enroulement, la première fixation (30) et/ou la deuxième fixation (50) reposant sur au moins un support (10) qui est posé sur une face supérieure (91) d'au moins un cadre de fenêtre (90) et qui s'étend le long de la longueur de la face supérieure (91), **caractérisé en ce que** le support (10) possède au moins un rail (16) sur ou dans lequel au moins la première fixation et/ou la deuxième fixation (30, 50) sont disposées avec possibilité de translation horizontale.

2. Capotage d'espace d'enroulement selon la revendication 1, **caractérisé en ce que** le support (10) présente au moins deux profilés (11, 15) réglables verticalement l'un par rapport à l'autre, parmi lesquels un premier profilé (11) repose, dans la position de montage, sur la face supérieure (91) du cadre de fenêtre (90) et un deuxième profilé (15) porte la première fixation (30) et/ou la deuxième fixation (50).

3. Capotage d'espace d'enroulement selon la revendication 2, **caractérisé en ce qu'**au moins un des deux profilés (11, 15) possède une fente (18) dans laquelle l'autre des deux profilés (11, 15) se met en prise avec une saillie (12) complémentaire de celle-ci et forme avec la fente un palier de glissement.

4. Capotage d'espace d'enroulement selon la revendication 1, **caractérisé en ce que** le support (10) présente au moins deux profilés (11, 15) réglables verticalement l'un par rapport à l'autre, parmi lesquels un premier profilé (11) est formé par la face supérieure (91) du cadre de fenêtre (90) et un deuxième profilé (15) porte la première fixation (30) et/ou la deuxième fixation (50).

5. Capotage d'espace d'enroulement selon l'une des revendications précédentes, **caractérisé en ce que** la première fixation (30) et/ou deuxième fixation (50) présentent au moins un pied de fixation (36) qui est en prise avec le support (10).

6. Capotage d'espace d'enroulement selon l'une des revendications précédentes, **caractérisé en ce que** la première fixation (30) et/ou la deuxième fixation (50) possèdent au moins un ergot d'enclenchement qui se met en prise dans au moins une rainure longitudinale du support (10) et fixe ainsi la fixation (30, 50) correspondante perpendiculairement à la longueur du support (10).

7. Capotage d'espace d'enroulement selon la revendication 6, **caractérisé en ce que** le support (10) possède au moins deux rainures longitudinales pour l'ergot d'enclenchement.

8. Capotage d'espace d'enroulement selon l'une des revendications précédentes, **caractérisé en ce que** le support (10) possède une face avant qui est cintrée vers l'intérieur au-dessus du cadre de fenêtre et forme ainsi avec la surface orientée vers l'intérieur de la paroi extérieure du coffre de volet roulant une fente d'entrée qui s'élargit vers le haut pour un blindage de volet roulant.

9. Capotage d'espace d'enroulement selon l'une des revendications 2 à 8, **caractérisé en ce que** le support (10) possède sur sa face avant (13) au moins un rail de guidage (14) dans lequel deux pièces d'introduction (70) comportant chacune une ouverture de fente qui se resserre vers le bas sont disposées avec possibilité de translation horizontale.

10. Capotage d'espace d'enroulement selon l'une des revendications précédentes, **caractérisé en ce que** la première fixation et/ou la deuxième (30, 50) présentent deux segments d'anneau (57, 59) qui sont reliés l'un à l'autre par au moins un élément d'écartement (58), de sorte que les segments d'anneau (57, 59) forment chacun, de part et d'autre de l'élément d'écartement (58), au moins une fente de guidage (60) pour l'au moins un tapis isolant (20).

11. Capotage d'espace d'enroulement selon l'une des revendications précédentes, **caractérisé en ce que** la première fixation et/ou la deuxième (30, 50) possèdent au moins une fente de guidage pour l'insertion du tapis isolant et **en ce que** la fixation (30, 50) présente un creux (33, 53) pour un arbre de volet roulant (2), le bord (31, 51) du creux renfermant au moins partiellement l'arbre de volet roulant (2) et formant avec l'arbre de volet roulant (2) une fente de rotation (32, 52) sans supporter l'arbre de volet roulant.

12. Matériel pour la construction d'un capotage d'espace d'enroulement selon l'une des revendications précédentes, **caractérisé en ce que** le matériel de construction comprend au moins la première fixation (30) et une deuxième fixation (50) avec au moins un tapis isolant (20), ainsi que le support (10), **caractérisé en ce que** le support (10) possède au moins un rail (16) sur lequel au moins la première fixation et/ou la deuxième (30, 50) peuvent être disposées avec possibilité de translation horizontale.
